# EUROPEAN PATENT SPECIFICATION

(11) **EP 0 687 724 B1**
(45) Date of publication and mention of the grant of the patent: **05.09.2001**
(21) Application number: 95303950.0
(22) Date of filing: 08.06.1995
(51) Int. Cl.: C11D 3/37, B01D 19/04, C11D 3/00

(54) **Foam control agent**
Schaumregulierendes Mittel
Agent pour la régulation de la mousse

(30) Priority: 17.06.1994 GB 9412178
(43) Date of publication of application: 20.12.1995
(73) Proprietor: DOW CORNING S.A., B-7180 Seneffe (BE)
(72) Inventor: Renauld, Franck Andre Daniel, B-1325 Chaumont-Gistoux (BE); L'Hostis, Jacqueline, B-1200 Woluwe-Saint Lambert, Brussels (BE)
(74) Representative: Vandamme, Luc Johan Roger

(56) References cited:
- EP-A- 0 163 398
- EP-A- 0 301 531
- EP-A- 0 517 298
- EP-A- 0 530 832
- EP-A- 0 605 727
- EP-A- 0 685 250
- EP-A- 0 687 725
- EP-A- 0 737 362
- EP-B- 0 519 079
- FR-A- 1 488 823
- FR-A- 1 577 374
- US-A- 3 455 839
- US-A- 4 722 882
- DATABASE WPI Week 8312, Derwent Publications Ltd., London, GB; AN 83-28527K & JP-A-58 024 309 (DICK HERCULES) 14 February 1983
- DATABASE WPI Week 9430, Derwent Publications Ltd., London, GB; AN 94-245389 & JP-A-6 178 902 (KAWASAKI KASEI KOGYO) 28 June 1994

## Description

The present invention relates to a foam control agent, and more particularly to a foam control agent which uses an organic water-insoluble liquid. More particularly the invention relates to a foam control agent which is based on organic oils and certain hydrophobic fillers and which is particularly suitable as a defoamer, i.e. a foam control agent which is capable of destroying existing foam upon addition to a foaming liquid, rather than limiting the production of foam or inhibiting foam, though both actions can sometimes be accomplished with one and the same foam control agent.

Foam control agents which are based on water-insoluble organic liquids have been know for some time. Such foam control agents have fairly good efficiency, and are useful in a number of applications, e.g. as detergent antifoams and as process aids in textile or pulp manufacture. Examples have been described in GB 1 224 026 and US 3,666,681.

In the former of the specifications, there is described a process for inhibiting foam formation in aqueous systems which comprises adding to the system before development of foam an antifoaming agent which is composed of 10 parts by weight of certain water-insoluble organic liquids and from 0.1 to 5.0 parts by weight of an organopolysiloxane which is compatible in the organic liquid and consists essentially of SiO₂ units and R₃SiO_{1/2} units in which R is a monovalent hydrocarbon radical containing from 1 to 6 carbon atoms and in which the number ratio of SiO₂ units to R₃SiO_{1/2} units is in the range from 0.6/1 to 1.2/1.

In the latter specification, there is described an antifoaming agent for aqueous systems consisting essentially of a mixture of 100 parts by weight of certain water insoluble organic liquids, from 0.5 to 10.0 parts by weight of an organopolysiloxane compound which is selected from the group consisting of a hydroxyl end-blocked dimethylsiloxane fluid of a certain viscosity and a benzene soluble organopolysiloxane resin consisting essentially of SiO₂ units and R₃SiO_{1/2} units in which R is a monovalent hydrocarbon radical containing from 1 to 6 carbon atoms and in which the number ratio of SiO₂ units to R₃SiO_{1/2} units is in the range from 1.2/1 to 0.6/1 and from 0.5 to 10.0 parts by weight of a filler which is a member selected from the group consisting of finely divided silica and methylsilsesquioxane gel, and from 0.002 to 5.0 parts by weight of a compound which is a member selected from the group consisting of a hydrocarbon amine, ammonia, a disilazane and a compound of the formula R'OH in which R' is an alkali or alkaline earth metal. The specification states that the latter compound is present to lend compatibility between the filler and silicone fluid or silicone resin. It further specifies that the amount of that component used has a critical effect upon compatibility of the mixture and if the amount used falls without the recited limits, the performance of the mixture is detrimentally altered. There is a desire to reduce the number of ingredients used in the preparation of foam-control agents without deterioration in its performance.

As the examples and some of the text only refers to organopolysiloxane resins wherein the number ratio of R₃SiO_{1/2} units to SiO₂ units is in the range from 1.2/1 to 0.6/1, it is thought that this is the ratio intended throughout the specifications.

In US specification 3,076,768, there is described a defoaming composition comprising from about 80% to about 97% of certain water-insoluble, organic liquids, from about 3% to about 20% of finely divided hydrophobic silica suspended in the organic liquid and from 0.5% to about 5% of a spreading agent. These defoaming compositions are said to be relatively inexpensive compared to silicone defoamers with a comparable effectiveness. The spreading agent is said to be necessary to allow the water-insoluble organic liquid to spread at the air-water interface, and is defined as a surfactant which may be anionic, cationic or nonionic.

We have now found that if a mixture of hydrophobic fillers is used, whereby at least one filler is insoluble and one is soluble in the organic liquid, an improved
foam control agent with defoaming capacities is obtained not requiring the presence of a compatibilising agent.

According to the invention there is provided a foam control agent comprising 100 parts by weight of (A) a water-insoluble organic liquid not including an organopolysiloxane, (B) from 0.1 to 20 parts by weight of a first hydrophobic filler which is insoluble in the organic liquid (A) and (C) 0.1 to 20 parts by weight of a second hydrophobic filler which is at least partially soluble in organic liquid (A) and which is an organosilicon resin consisting mainly of units having the general formula R₃SiO_{1/2} and units of the general formula SiO_{4/2}, wherein R denotes a monovalent hydrocarbon group or a hydroxyl group in the absence of a hydrocarbon amine, ammonia, a disilazane of the formula (CH₃)₃Si N(H)Si(CH₃)₃ and a compound of the formula ZOH, wherein Z is an alkali or alkaline earth metal. Water-insoluble organic liquids (A) may be any suitable and known material which preferably has an aromatic content of less than 10% by weight of the liquid or it may be a mixture of one or more such liquids, which liquid or mixture of liquids is not a solvent for filler (B) but is a solvent for filler (C). It has to be a liquid material at the operating temperature of the foam control agent which may be in the range e.g. of from 0°C to 95°C. In preferred foam control agents, the organic liquid is liquid at 25°C. Suitable organic liquids include oils, e.g. mineral oils, isoparaffinic oils, vegetable oils, polyoxypropylene glycols, polyoxybutylene glycols, esters of carboxylic acids and monohydric alcohols, higher carboxylic acids and higher alcohols. Examples of such suitable organic liquids include white oils, mineral oil, dioctyl phthalate, diethyl succinate, methyl caproate, butyl pelargonate, ethyl stearate, dodecyl laurate, methyl melissate, decyl alcohol, octadecyl alcohol, stearic acid, myristic acid, peanut oil, coconut oil, olive oil, cottonseed oil and linseed oil. Preferred organic liquids however are oils, particularly isoparaffinic oils, vegetable oils, mineral oils and fatty esters. These oils and esters are preferred for their relative low cost, their availability, and mostly because they have the right solvent or non-solvent characteristics for the preferred hydrophobic fillers (B) and (C) which are to be used, as will be described below.

The first hydrophobic filler (B) is to be a filler which is insoluble in the organic liquid. Hydrophobic fillers for foam control agents are well known and have been described in many patent specifications. They may be such materials as silica, titania, ground quartz, silicone based resins, organic waxes, e.g. polyethylene wax, ethylene alkyl amides, e.g. ethylene bis stearylamide and methyl silsesquioxane gels.

One important condition needs to be fulfilled for the filler to be acceptable as filler (B) in the foam control agent according to the invention. This condition is the insolubility of the filler in organic liquid (A). This can be easily tested prior to use, e.g. by merely mixing some of the filler with some of the organic liquid (A). The mixture must be heterogeneous for the insolubility condition to be fulfilled. Some degree of solubility can be tolerated, but this should not be higher than about 1 part by weight for every 100 parts by weight of organic liquid (A).

Some of the fillers mentioned above are not hydrophobic in nature, but can be used if made hydrophobic. This could be done either in situ (i.e. when dispersed in the organic liquid (A)), or more preferably by pretreatment of the filler prior to mixing with liquid (A). Methods of making fillers hydrophobic are well known to the person skilled in the art of foam control agents, and have been described in a number of publications. It is preferred that the first filler (B) is ethylene bis strearyl amide, polyethylene wax or more preferably a silica which is made hydrophobic. This can be done e.g. by treatment with a fatty acid, but is preferably done by the use of methyl substituted organosilicon materials. Suitable hydrophobing agents include polydimethylsiloxanes, dimethylsiloxane polymers which are endblocked with silanol or silicon-bonded alkoxy groups, hexamethyldisilazane, hexamethyldisiloxane and organosilicon resins consisting of monovalent groups (CH₃)₃SiO_{1/2} and tetravalent groups SiO₂ in a ratio of from 0.5/1 to 1.1/1.

Preferred silica materials are those which are prepared by pyrolisis, i.e. the so called fumed silicas, but silica prepared by precipitation or by gel formation are also acceptable. It is preferred to use silica fillers which have an average particle size of from 1 to 30*µ*m, more preferably from 3 to 15µm, most preferably from 5 to 10*µ*m. Average particle size for the purpose of the present invention are to be determined when the fillers are dispersed in the liquid (A) rather than as specified by e.g. the manufacturer of the silica particles. Larger particles can also be used, but are preferably only used in conjunction with the preferred silica particles. Such materials are well known and are commercially available, both in hydrophilic form and in hydrophobic form.

The second filler (C) must be a filler which is at least partially soluble in the organic liquid. Although it is preferred that filler (C) consists only of monovalent and tetravalent siloxy units as defined above, it is also acceptable that up to 20% of all units present are divalent units R₂SiO_{2/2} or trivalent RSiO_{3/2} units. R is preferably an alkyl group, but other hydrocarbon units may also be present, eg. alkenyl units, in small amounts, preferably not exceeding 5% of all R units. Small amounts of silicon-bonded hydroxyl groups may however also be present. Filler (C) is a siloxane resin consisting only of monovalent trialkyl-siloxy (M) groups of the formula R'₃SiO_{1/2} and tetra-functional (Q) groups SiO_{4/2}, wherein R' denotes an alkyl group, preferably having 1 to 6 carbon atoms. In order to fulfill the condition of solubility in liquid (A), it is preferred that the number ratio of M groups to Q groups is in the range 0.65:1 to 4:1, more preferably 0.65:1 to 2.3:1, most preferably 0.65:1 to 1.5:1. It is however to be understood that the solubility will be slightly different from one organic liquid to another. These preferred siloxane resins are liquid resins at atmospheric pressure and a temperature of 25°C. It was found that the most preferred filler (C) was a siloxane resin particle with the largest possible molecular weight while retaining its solubility in liquid (A). This will tend to put the filler close to the borderline between solubility and insolubility. With the expression "at least partially soluble" is meant that the filler must at least be soluble to an extent in which 2 parts by weight of the filler can be dissolved in 100 parts by weight of liquid (A) at the temperature at which the foam control agent is to be used, preferably at 25°C. More preferably substantially all of filler (C) (i.e. at least 90% of the amount of filler used) should be soluble in liquid (A) at the temperature of use. The preferred alkyl group R is a group having from 1 to 6 carbon atoms, most preferably methyl or ethyl. It is particularly preferred that the alkyl group is methyl for at least 80% of all R groups present, and even more preferably substantially all R groups are methyl groups. Such siloxane resins are well known and their manufacture has been described in many publications. They can be made in solvent or in situ in liquid (A), e.g. by hydrolysis of certain silane materials. Particularly preferred is the hydrolysis and condensation in the presence of a solvent e.g. xylene or octylstearate of a precursor of the tetravalent siloxy units (e.g. tetraorthosilicate, tetraethyl orthosilicate, ethyl polysilicate or sodium silicate) and a precursor of the monovalent siloxy unit (e.g. trimethyl-chlorosilane, hexamethyl-disiloxane or hexamethyl-disilazane).

Apart from the three ingredients mentioned as essential ingredients in the foam control agent, other conventional additives may also be included in foam control agents according to the invention. Such additives include adjusting agents for density, preservatives, thickening agents, surfactants, alcohols, especially fatty alcohols, viscosity modifiers, colorants and others. If desired other liquids e.g. silicone oils may also be added, but this is not preferred, as it would increase the cost of the foam control agent without the guarantee of commensurate improvement in performance. Other additional ingredients in the foam control agent could include other insoluble hydrophobic fillers or other hydrophobic fillers which are soluble in the organic liquid (A), but these are not preferred and should definitely not be present in quantities which exceed those of the essential fillers.

It is however surprising that the presence of hydrocarbon amines, ammonia, a disilazane of formula (CH₃)₃SiN(H)Si(CH₃)₃ or compounds of the formula ZOH, wherein Z is an alkali or alkaline earth metal is not required in spite of the teaching of US 3,666,681. This may be due to the fact that in the foam control agent according to the present invention, compatibility between the filler (B) and siloxane resin filler (C) is not desirable. More surprisingly, where the filler (C) fulfills the conditions identified above, foam control agents according to the invention perform better in a number of applications than foam control agents according to the teaching of US 3,666,681.

The amount of fillers (B) and (C) which may be used in the foam control agents according to the invention may be up to 20 parts by weight of each of the fillers. The weight ratio of filler (B) to filler (C) is preferably in the range from 1:10 to 10:1, more preferably 1:5 to 5:1, most preferably 1:2 to 2:1. The total amount of fillers (B) and (C) which are to be used in foam control agents according to the invention are in the range of from 0.2 to 40 parts by weight for every 100 parts of organic liquid (A). More preferably they are present in amounts of from 2 to 20 parts, most preferably 8 to 15 parts.

Foam control agents according to the invention may be made by merely mixing the ingredients together using suitable mixing or homogenising equipment. The order of mixing the ingredients is not critical, although it is preferred to add the first and second filler to the liquid and disperse them by mixing, rather than adding the liquid to the fillers. When first filler is made hydrophobic in situ (i.e. after having been dispersed in the liquid (A)), it is important that filler (C) is not added till the hydrophobing has taken place.

If either of fillers (B) or (C) is added in solvent, it is possible to remove the solvent before using the foam control agent, but this is not necessary. With the preferred first filler (B), i.e. silica, it is most preferred that it is rendered hydrophobic prior to addition to the organic liquid. Where filler (C) is prepared in a solvent, which may be an aromatic or aliphatic solvent, e.g. xylene, toluene, ester or isoparaffinic oil, it may be added as a solution. Once prepared, the fillers (B) and (C) may be added separately or after having been mixed together. The amount of solvent used is preferably kept at the minimum required level in most cases, in order to avoid the presence of components which may not contribute to the efficiency of the foam control agent.

The foam control agents according to the invention may be used for a number of applications where generated foam must be eliminated or reduced. Foam control agents according to the invention are particularly useful in those applications where prior art foam control agents based on organic water-insoluble liquids have been used. These applications include foam control in the paper pulp industry, cutting oils and foam control in textile dyeing baths.

There now follows a number of examples which illustrate the invention and show its advantage over comparative examples using prior art technology. All parts and percentages used are by weight unless otherwise indicated.

### EXAMPLES

In a 2 litre flask, equipped with stirrer, thermometer, a nitrogen blanket and dropping funnel were charged 60g of water, 40g of a HCl solution, 30g of ethanol and 186.3g of hexamethyldisiloxane. To this stirred mixture, maintained at 50°C, 208g of tetraethoxysilane were added drop-wise over a period of 1 hour. When the addition was complete, the mixture was stirred for an additional 2 hours at 50°C and was allowed to cool to room temperature. A siloxane resin having monovalent trimethylsiloxane units and tetravalent siloxane units in a number ratio of 2.3:1 (referred to as M_{2.3}Q - MW 900) was separated, washed with water, dried over MgSO₄ and stripped for 2 hours at 80°C and 65 mbar. Similar procedures were adopted with varied amounts of ingredients to produce M_{0.45}Q, M_{0.65}Q (MW 4600), M_{0.9}Q, M_{1.15}Q (MW 1900), M_{1.5}Q (MW 1250) and M₄Q resins, where MW indicates theoretical average number molecular weight.

The solubility of each of these resins were tested in a number of organic liquids (A), and the results are given in Table I below, where S means fully soluble, I means insoluble and S/I means partially soluble. Isopar® V is an isoparaffinic oil supplied by Exxon; Shelflex® 720 is a mineral oil supplied by Shell, Kaydol® is a white mineral oil supplied by Witco.

**TABLE I**

| Solubility of Filler (C) in function of x in MₓQ in Liquid (A) | | | | | | | |
|---|---|---|---|---|---|---|---|
| Liquid (A) x= | 4 | 2.3 | 1.5 | 1.15 | 0.9 | 0.65 | 0.45 |
| Isopar® V | S | S | S | S | S | S/I | I |
| Shelflex® 720 | S | S | S | S/I | I | I | I |
| Kaydol® | S | S | S | S/I | I | I | I |
| Peanut oil | S | S | S | S/I | I | I | I |
| Octylstearate | S | S | S | S | S | S | I |
| Xylene | S | S | S | S | S | S | I |

A series of defoamers were prepared by homogenising 5 parts of a hydrophobic fumed silica TS530 (supplied by Cabot) and 5 parts MₓQ resin in 90 parts of Liquid (A), as shown in Table II.

**TABLE II**

| Defoamer formulations | | |
|---|---|---|
| Defoamer | Liquid (A) | x in MₓQ |
| 1 | Kaydol® | 2.3 |
| 2 | Kaydol® | 1.5 |
| 3 | Kaydol® | 1.15 |
| 4 | Kaydol® | 0.9 |
| 5 | Kaydol® | 0.65 |
| 6 | Isopar® V | 1.5 |
| 7 | Isopar® V | 1.15 |
| 8 | Isopar® V | 0.65 |

The defoaming evaluation was performed by carrying out a sparge test in a vertical glass cylinder containing 250ml of a solution of sodium dodecyl benzene sulphonate (SDBS) through which air is bubbled using a sintered glass air bubbler. At constant air flow, the foam is allowed to reach a pre-determined height in the cylinder, at which the defoamer is added at an amount of y *µ*l (see Table III below) and the foam level decrease monitored with time. In addition 3 defoamers were also tested in a solution of a nonionic surfactant (Dobanol® 45-7) instead of SDBS. These test are indicated with an asterisk after the value for y. As can be seen from Tables I and II, Defoamers 1, 2, 3, 6, 7 and 8 are foam control agents according to the invention. In addition to testing the defoamers given in Table II, further comparative defoamers (9 to 11) were used, which consisted of in the case defoamer 9, the formulation of defoamer 1 without the presence of any MₓQ resin, in the case of defoamer 10, defoamer 6, without the presence of any MₓQ resin and in the case of defoamer 11, a commercial defoamer based on mineral oil (provided by Henkel-Nopco). The results are given in Table III below, which shows the improved efficiency of the foam control agents according to the invention.

**TABLE III**

| Defoaming efficiency Foam height in mm vs time (in seconds) | | | | | | | | | | | | |
|---|---|---|---|---|---|---|---|---|---|---|---|---|
| Defoamer | y(µl) | 0 | 10 | 20 | 30 | 40 | 50 | 60 | 70 | 80 | 90 | 100 |
| 1 | 30 | 250 | 240 | 230 | 220 | 215 | 210 | 200 | 200 | 200 | 200 | 200 |
| 2 | 30 | 250 | 210 | 170 | 135 | 105 | 80 | 55 | 20 | 0 | 0 | 0 |
| 3 | 30 | 250 | 160 | 120 | 65 | 20 | 0 | 0 | 0 | 0 | 0 | 0 |
| 4 | 50∗ | 250 | 150 | 120 | 100 | 100 | 100 | 100 | - | - | - | - |
| 5 | 30 | 250 | 245 | 240 | 235 | 230 | 225 | 220 | 215 | 210 | 205 | 200 |
| 6 | 20 | 250 | 200 | 175 | 150 | 144 | 138 | 132 | 125 | 116 | 108 | 100 |
| 7 | 20 | 250 | 150 | 100 | 80 | 60 | 30 | 0 | 0 | 0 | 0 | 0 |
| 8 | 20 | 250 | 100 | 30 | 0 | 0 | 0 | 0 | 0 | 0 | 0 | 0 |
| 8 | 50∗ | 250 | 160 | 120 | 80 | 50 | 0 | 0 | - | - | - | - |
| 9 | 30 | 250 | 250 | 250 | 250 | 250 | 250 | 250 | 250 | 250 | 250 | 250 |
| 10 | 20 | 250 | 250 | 250 | 250 | 250 | 250 | 250 | 250 | 250 | 250 | 250 |
| 11 | 20 | 250 | 150 | 160 | 170 | 180 | 190 | 200 | - | - | - | - |
| 11 | 50∗ | 250 | 150 | 200 | 200 | 200 | 200 | 200 | - | - | - | - |

In order to compare the performance of foam control agents according to the present invention with those of the prior art, defoamer 2 was compared with defoamer C2, which was made according to the teachings of US 3,666,681 using 5% of a fumed silica, 5% of the same MₓQ as defoamer 2, 1% hexamethyldisilazane and 89% Kaydol®. The efficiency of the foam control agents was tested in a sparge test, similar to the one described above. The difference was that the foam control agent was added prior to the formation of any foam that a solution of 0.5% by weight of SDBS was used and that the flow rate of air was 30 litres/hour. Defoamer 2 was added at an amount of 30µl, while C2 was added at 50*µ*l. In spite of the lower addition level, defoamer 2 kept the foam under control for about 65 seconds, while C2 did not manage to do so for a full 50 seconds.

## Claims

1. A foam control agent comprising 100 parts by weight of (A) a water-insoluble organic liquid not including an organopolysiloxane, from 0.1 to 20 parts by weight of (B) a first hydrophobic filler and 0.1 to 20 parts by weight of (C) a second hydrophobic filler and which is an organosilicon resin consisting mainly of units having the general formula R₃SiO_{1/2} and units of the general formula SiO_{4/2}, wherein R denotes a monovalent hydrocarbon group or a hydroxyl group, **characterised in that** filler (B) is insoluble in liquid (A), in that filler (C) is at least partially soluble in liquid (A) and in that the foam control agent is free from hydrocarbon amine, ammonia, disilazane of the formula (CH₃)₃SiN(H)Si(CH₃)₃ and compounds of the formula ZOH wherein Z is an alkali or alkaline earth metal.

2. A foam control agent according to Claim 1, further **characterised in that** organic liquid (A) is a liquid material at the operating temperature of the foam control agent.

3. A foam control agent according to either one of Claims 1 and 2, further **characterised in that** organic liquid (A) is an isoparaffinic oil, a fatty ester, a mineral oil or a vegetable oil.

4. A foam control agent according to any one of the preceding claims, further **characterised in that** first hydrophobic filler (B) is a silica, ethylyne bis stearylamide or polyethylene wax.

5. A foam control agent according to any one of the preceding claims, further **characterised in that** hydrophobic filler (C) is a siloxane resin consisting mainly of monovalent trialkylsiloxy groups R₃SiO_{1/2} and tetravalent siloxy groups SiO_{4/2}, wherein R represents an alkyl group, and in that the ratio of monovalent to tetravalent groups is from 0.65:1 to 2.3:1.

6. A foam control agent according to any one of the preceding claims, further **characterised in that** filler (C) has the highest possible molecular weight while remaining at least partially soluble in organic liquid (A).

7. A foam control agent according to any one of the preceding claims, further **characterised in that** fillers (B) and (C) are present in a weight ratio of 1:2 to 2:1. and in that the total amount of fillers (B) and (C) is from 8 to 15 parts by weight for every 100 parts of organic liquid (A).

8. The use of a foam control agent according to any one of the preceding claims, **characterised in that** the foam control agent is for use in paper pulp manufacture.

9. The use of a foam control agent according to any one of Claims 1 to 7, **characterised in that** the foam control agent is used in textile dyeing processes.

10. The use of a foam control agent according to any one of Claims 1 to 7, **characterised in that** the foam control agent is used for cutting oils.

## Patentansprüche

1. Schaumsteuerungsmittel, das 100 Gew.-Teile (A) einer wasserunlöslichen organischen Flüssigkeit, die kein Organopolysiloxan umfasst, 0,1 bis 20 Gew.-Teile (B) eines ersten hydrophoben Füllstoffs und 0,1 bis 20 Gew.-Teile (C) eines zweiten hydrophoben Füllstoffs, bei dem es sich um ein Organosiliciumharz handelt, das im wesentlichen aus Einheiten der allgemeinen Formel R₃SiO_{1/2} und Einheiten der allgemeinen Formel SiO_{4/2} besteht, wobei der Rest R für eine einwertige Kohlenwasserstoffgruppe oder eine Hydroxylgruppe steht, umfasst und **dadurch gekennzeichnet** ist, dass der Füllstoff (B) in der Flüssigkeit (A) unlöslich ist, dass der Füllstoff (C) mindestens teilweise in der Flüssigkeit (A) löslich ist und dass das Schaumsteuerungsmittel kein(e) Kohlenwasserstoffamin, Ammoniak, Disilazan der Formel (CH₃)₃SiN(H)Si(CH₃)₃ und Verbindungen der Formel ZOH enthält, wobei Z für ein Alkali- oder Erdalkalimetall steht.

2. Schaumsteuerungsmittel nach Anspruch 1, des weiteren **dadurch gekennzeichnet, dass** die organische Flüssigkeit (A) bei der Betriebstemperatur des Schaumsteuerungsmittels ein flüssiges Material ist.

3. Schaumsteuerungsmittel nach einem der Ansprüche 1 oder 2, des weiteren **dadurch gekennzeichnet, dass** die organische Flüssigkeit (A) ein Isoparaffinöl, ein Fettsäuroester, ein Mineralöl oder ein pflanzliches Öl ist.

4. Schaumsteuerungsmittel nach einem der vorhergehenden Ansprüche, des weiteren **dadurch gekennzeichnet, dass** der erste hydrophobe Füllstoff (B) ein Siliciumdioxid, Ethylenbisstearylamid oder Polyethylenwachs ist.

5. Schaumsteuerungsmittel nach einem der vorhergehenden Ansprüche, des weiteren **dadurch gekennzeichnet, dass** der hydrophobe Füllstoff (C) ein Siloxanharz ist, das im wesentlichen aus einwertigen Trialkylsiloxygruppen R₃SiO_{1/2} und vierwertigen Siloxygruppen SiO_{4/2} besteht, wobei der Rest R für eine Alkylgruppe steht, und dadurch, dass das Verhältnis einwertige Gruppen/vierwertige Gruppen in einem Bereich von 0,65:1 bis 2,3:1 liegt.

6. Schaumsteuerungsmittel nach einem der vorhergehenden Ansprüche, des weiteren **dadurch gekennzeichnet, dass** der Füllstoff (C) das höchstmögliche Molekulargewicht aufweist, während er noch zumindestens teilweise in der organischen Flüssigkeit (A) löslich bleibt.

7. Schaumsteuerungsmittel nach einem der vorhergehenden Ansprüche, des weiteren **dadurch gekennzeichnet, dass** die Füllstoffe (B) und (C) in einem Gewichtsverhältnis von 1:2 bis 2:1 vorhanden sind, und dadurch, dass die Gesamtmenge der Füllstoffe (B) und (C) 8 bis 15 Gew.-Teile pro 100 Gew.-Teile der organischen Flüssigkeit beträgt.

8. Verwendung eines Schaumsteuerungsmittels nach einem der vorhergehenden Ansprüche, **dadurch gekennzeichnet, dass** das Schaumsteuerungsmittel zur Verwendung in der Papierzellstoffherstellung vorgesehen ist.

9. Verwendung eines Schaumsteuerungsmittels nach einem der Ansprüche 1 bis 7, **dadurch gekennzeichnet, dass** das Schaumsterungsmittel in Textilfärbeverfahren verwendet wird.

10. Verwendung eines Schaumsteuerungsmittels nach einem der Ansprüche 1 bis 7, **dadurch gekennzeichnet, dass** das Schaumsteuerungsmittel für Schneidöle verwendet wird.

## Revendications

1. Agent de démoussage comprenant 100 parties en poids de (A) un liquide organique insoluble dans l'eau, n'incluant pas un organopolysiloxane, de 0,1 à 20 parties en poids de (B) une première charge hydrophobe et 0,1 à 20 parties en poids de (C) une seconde charge hydrophobe et qui est une résine organosiliciée consistant principalement en motifs ayant la formule générale R₃SiO_{1/2} et en motifs ayant la formule générale SiO_{4/2}, où R représente un groupe hydrocarboné monovalent ou un groupe hydroxyle, **caractérisé en ce que** la charge (B) est insoluble dans le liquide (A), en ce que la charge (C) est au moins partiellement soluble dans le liquide (A) et en ce que l'agent de démoussage est exempt d'amine hydrocarbonée, d'ammoniac, de disilazane de la formule (CH₃)₃SiN(H)Si(CH₃)₃ et de composés de la formule ZOH où Z est un métal alcalin ou alcalino-terreux.

2. Agent de démoussage selon la revendication 1, caractérisé en outre en ce que le liquide organique (A) est une matière liquide à la température opératoire de l'agent de démoussage.

3. Agent de démoussage selon l'une quelconque des revendications 1 et 2, caractérisé en outre en ce que le liquide organique (A) est une huile isoparaffinique, un ester gras, une huile minérale ou une huile végétale.

4. Agent de démoussage selon l'une quelconque des revendications précédentes, caractérisé en outre en ce que la première charge hydrophobe (B) est une silice, l'éthylène bis stéarylamide ou une cire de polyéthylène.

5. Agent de démoussage selon l'une quelconque des revendications précédentes, caractérisé en outre en ce que la charge hydrophobe (C) est une résine de siloxanes principalement constituée par des groupes trialkylsiloxy monovalents R₃SiO_{1/2} et des groupes siloxy tétravalents SiO_{4/2}, où R représente un groupe alkyle, et en ce que le rapport des groupes monovalents à tétravalents est de 0,65:1 à 2,3:1.

6. Agent de démoussage selon l'une quelconque des revendications précédentes, caractérisé en outre en ce que la charge (C) a le poids moléculaire le plus élevé possible tout en restant au moins partiellement soluble dans le liquide organique (A).

7. Agent de démoussage selon l'une quelconque des revendications précédentes, caractérisé en outre en ce que les charges (B) et (C) sont présentes en un rapport pondéral de 1:2 à 2:1 et en ce que la quantité totale de charges (B) et (C) est de 8 à 15 parties en poids pour chaque 100 parties de liquide organique (A).

8. Utilisation d'un agent de démoussage selon l'une quelconque des revendications précédentes, **caractérisée en ce que** l'agent de démoussage est à utiliser dans la fabrication de pâte à papier.

9. Utilisation d'un agent de démoussage selon l'une quelconque des revendications 1 à 7, **caractérisée en ce que** l'agent de démoussage est utilisé dans des procédés de teinture de textile.

10. Utilisation d'un agent de démoussage selon l'une quelconque des revendications 1 à 7, **caractérisée en ce que** l'agent de démoussage est utilisé pour des huiles de coupe.
